(19)

Europäisches Patentamt
European Patent Office
Office européen des brevets

(11) **EP 3 301 921 A1**

(12) **EUROPEAN PATENT APPLICATION**

(43) Date of publication:
**04.04.2018 Bulletin 2018/14**

(51) Int Cl.:
*H04N 19/124* (2014.01)     *H04N 19/167* (2014.01)
*H04N 19/176* (2014.01)

(21) Application number: **16306270.6**

(22) Date of filing: **30.09.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **GALPIN, Franck
35576 CESSON-SEVIGNE (FR)**

• **RACAPE, Fabien
35576 CESSON-SEVIGNE (FR)**
• **RATH, Gagan
35576 CESSON-SEVIGNE (FR)**
• **POIRIER, Tangi
35576 CESSON-SEVIGNE (FR)**
• **LELEANNEC, Fabrice
35576 CESSON-SEVIGNE (FR)**

(74) Representative: **Huchet, Anne
TECHNICOLOR
1-5, rue Jeanne d'Arc
92130 Issy-les-Moulineaux (FR)**

(54) **METHOD AND APPARATUS FOR CALCULATING QUANTIZATION PARAMETERS TO ENCODE AND DECODE AN IMMERSIVE VIDEO**

(57)     A method and an apparatus for encoding an immersive video are disclosed. For at least one block of a picture of said video, a parameter for quantizing is determined according to a spatial position of said block in said picture, and used for encoding said block. A corresponding decoding method and decoding apparatus are also disclosed.

FIG. 6A

**Description**

1. Technical field

A method and an apparatus for coding a video into a bitstream are disclosed. More particularly, a method and an apparatus for coding an immersive video are disclosed. Corresponding decoding method and apparatus are further disclosed.

2. Background

Recently there has been a growth of available large field-of-view content (up to 360°). Such content is potentially not fully visible by a user watching the content on immersive display devices such as Head Mounted Displays (HMD), smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

3. Summary

In the present disclosure, the terms "omnidirectional video" or "immersive video " are used to designate immersive video in general. This should not be interpreted as limiting the scope of the present disclosure to the case of omnidirectional video or immersive video. The principle disclosed herein is applicable to other types of videos, for example, to a video with oversampling, to fish-eye videos, or to paraboloid videos.

According to an aspect of the present principle, a method for coding a video is disclosed. Such a method comprises, for at least one block of a picture of said video: determining for said block, a parameter for quantizing according to a spatial position of said block in said picture; and quantizing said block using said determined parameter for quantizing.

The present disclosure makes it possible to quantize adaptively a block of a picture according to the spatial position of the block.

According to another aspect of the disclosure, a method for decoding a video is disclosed. Such a decoding method comprises, for at least one block of a picture of said video: determining for said block, a parameter for quantizing according to a spatial position of said block in said picture; dequantizing a block of quantized coefficients using said determined parameter for quantizing; and reconstructing said block from at least said dequantized block.

According to another aspect of the disclosure, an apparatus for coding a video is disclosed. Such an apparatus comprises, for at least one block of a picture of said video: means for determining for said block, a parameter for quantizing according to a spatial position of said block in said picture; and means for quantizing said block using said determined parameter for quantizing.

According to another aspect of the disclosure, an apparatus for decoding a video is disclosed. Such an apparatus comprises, for at least one block of a picture of said video: means for determining for said block, a parameter for quantizing according to a spatial position of said block in said picture; means for dequantizing a block of quantized coefficients using said determined parameter for quantizing; and means for reconstructing said block from at least said dequantized block.

Therefore, the embodiment allows to take into account during quantization the redundancies or periodicities of the projection function. Thus, compression efficiency of the video is improved.

According to another aspect of the present principle, an immersive rendering device comprising an apparatus for decoding a bitstream representative of an immersive video according is disclosed.

According to another aspect of the present principle, a system for immersive rendering of an immersive video encoded into a bitstream is disclosed. Such a system comprises at least a network interface for receiving said bitstream from a data network, an apparatus for decoding said bitstream according to any one of the embodiments disclosed herein, an immersive rendering device for rendering said decoded immersive video.

According to another aspect of the present principle, a bitstream representative of a coded video is also disclosed, such a bitstream comprising: coded data representative of at least one block of a picture of said video; and coded data representative of a set of parameters for quantizing computed for said picture according to said projection function, wherein a parameter for quantizing selected from said set of parameters for quantizing is used for quantizing said at least one block when coding data representative of said block, said parameter for quantizing being selected according to a spatial position of said block in said picture.

A non-transitory processor readable medium having stored thereon such a bitstream is also disclosed.

Said video may be an immersive video. Said video may be represented as a surface, said surface being projected onto said picture using a projection function.

To determine said parameter for quantizing for said block according to a spatial position of said block in said picture, said parameter for quantizing may be computed for said block according to a value of said projection function depending on said spatial position of said block. Such an embodiment allows saving memory as the parameter for quantizing does not need to be stored.

According to another embodiment of the present disclosure, to determine said parameter for quantizing for said block according to a spatial position of said block in said picture, a set of parameters for quantizing may be computed for said picture according to said projection function, and said parameter for quantizing can then be selected for said block from the set of parameters for quantizing, depending on the spatial position of said block in said picture.

This embodiment allows saving computational resources. The parameters for quantizing can thus be computed once for the whole video, and stored to be used when coding or decoding the pictures of the video.

Said set of parameters for quantizing may be coded into said bitstream. Therefore, it is not necessary on the decoder side to re-compute the parameters for quantizing used to dequantize the coefficients of the block.

To determine said parameter for quantizing for said block according to a spatial position of said block in said picture at the decoder side, a set of parameters for quantizing may be decoded from said bitstream; and said parameter for quantizing for said block may be selected from among said set of parameters for quantizing according to the spatial position of said block in said picture. Therefore, it is not necessary on the decoder side to re-compute the parameter for quantizing used to dequantize the coefficients of the block.

Said set of parameters for quantizing may be coded in a Sequence Parameter Set syntax structure such as defined by an H.264/AVC standard or an HEVC standard, or in a Picture Parameter Set syntax structure such as defined by an H.264/AVC standard or an HEVC standard, or in a Slice Header syntax structure corresponding to said picture, such as defined by an H.264/AVC standard or an HEVC standard.

Said parameter for quantizing may be a quantization parameter associated with a quantization step size. For instance, such a quantization parameter is a QP value as is known from current video codec H.264/AVC or HEVC, etc. Such a QP value can be computed from a deltaQP value and a base QP value defined for one or more reference points on the 2D picture, for instance one or more reference points for which the 3D surface is critically sampled when projected onto the 2D picture using the projection function, i.e. respecting the Nyquist sampling theory. The deltaQP is thus computed according to the projection function and is dependent on the position of the pixel in the 2D picture.

Said parameter for quantizing may be a density factor obtained from said projection function and be used for weighting transform coefficients from said block in said quantizing or dequantizing. This embodiment allows to adaptively quantize the blocks of transform coefficients of a video without impacting block-based QP parameter assignment methods that would be used in perceptual video encoding methods, for instance for optimizing the visual quality. Such perceptual video encoding methods can thus be used without necessarily adapting to the immersive video coding case.

Said parameters for quantizing for the block may be selected as a parameter for quantizing computed for at least one pixel of said block of pixels, wherein said at least one pixel of said block of pixels may be a center pixel of said block of pixels. Said selected parameter for quantizing may be an average sum of parameters for quantizing computed for all pixels of said block of pixels.

When said projection function is an equi-rectangular projection, and said parameter for quantizing for said block is selected as being a parameter for quantizing computed for a pixel being on a same row of a center pixel of said block or as being a parameter for quantizing assigned to a row index of said block, only one parameter for quantizing per row of the picture may need to be computed as for the equi-rectangular projection. It can be shown that the parameter for quantizing only depends on the vertical axis (Y-plane). A same parameter for quantizing can thus be used for all pixels of a same row of the picture.

Said block may belong to a group of blocks comprising at least one block of transform coefficients, said group of blocks forming a block having a size larger than or equal to said block to encode. Said parameter for quantizing for said block may be selected as being a parameter for quantizing assigned to said group of blocks. According to this embodiment, it is not necessary to transmit to the decoder a parameter for quantizing for each pixel of the picture or for each block of transform coefficients of the picture. Thus, this allows saving bitrate.

According to another embodiment, when said projection function is an equi-rectangular projection, said parameter for quantizing assigned to said group of blocks may be a parameter for quantizing assigned to a row index of said group of blocks.

According to one implementation, the different steps of the method for coding a video or decoding a video as described here above are implemented by one or more software programs or software module programs comprising software instructions intended for execution by a data processor of an apparatus for coding/decoding a video, these software instructions being designed to command the execution of the different steps of the methods according to the present principles.

A computer program is also disclosed that is capable of being executed by a computer or by a data processor, this program comprising instructions to command the execution of the steps of a method for coding a video or of the steps of a method for decoding a video as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.

Again, the information carrier can be a transmissible carrier such as an electrical or optical signal which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

4. Brief description of the drawings

Figure 1 illustrates an exemplary system for encoding and decoding omnidirectional videos, according to an embodiment of the present principles,

Figure 2A illustrates an example of projection from a spherical surface S onto a rectangular picture,

Figures 2B and 2C respectively illustrate coordinate reference systems for the rectangular picture and the spherical surface,

Figure 3A illustrates an example of projection from a cubic surface S onto six pictures,

Figure 3B illustrates a corresponding re-arranged rectangular picture,

Figures 3C and 3D respectively illustrate coordinate reference systems for the rectangular picture and the cubic surface,

Figure 3E illustrates a layout used for re-arranging the six faces of the cube onto the rectangular picture whose coordinate reference system is disclosed in figure 3C,

Figure 4 illustrates block diagrams for an exemplary method for coding an omnidirectional video into a bitstream according to an embodiment of the present disclosure,

Figure 5 illustrates a block diagram for an exemplary method for decoding a bitstream representative of an omnidirectional video according to an embodiment of the present disclosure,

Figure 6A illustrates a flow diagram for an exemplary method for coding at least one block of pixels from a picture according to an embodiment of the present disclosure,

Figure 6B illustrates a flow diagram for an exemplary method for coding at least one block of pixels from a picture according to another embodiment of the present disclosure,

Figure 7 illustrates a flow diagram for an exemplary method for decoding at least one block of pixels from a picture according to an embodiment of the present disclosure,

Figure 8 illustrates a flow diagram for an exemplary method for decoding at least one block of pixels from a picture according to another embodiment of the present disclosure,

Figure 9 illustrates a flow diagram for an exemplary method for decoding at least one block of pixels from a picture according to another embodiment of the present disclosure,

Figure 10 illustrates an exemplary apparatus for encoding an omnidirectional videos into a bitstream according to one embodiment,

Figure 11 illustrates an exemplary apparatus for decoding a bitstream representative of an omnidirectional videos according to one embodiment,

Figure 12 illustrates a block diagram of an exemplary system in which various aspects of the exemplary embodiments of the present principles may be implemented,

Figure 13 represents a first embodiment of a system, according to a particular embodiment of the present principles,

Figure 14 represents a first embodiment of a system, according to a particular embodiment of the present principles,

Figure 15 represents a first embodiment of a system, according to a particular embodiment of the present principles,

Figure 16 represents a first embodiment of a system, according to a particular embodiment of the present principles,

Figure 17 represents a first embodiment of a system, according to a particular embodiment of the present principles,

Figure 18 represents a first embodiment of a system, according to a particular embodiment of the present principles,

Figure 19 represents a first embodiment of a system according to the present principles,

Figure 20 represents a first embodiment of a system according to the present principles,

Figure 21 represents a first embodiment of an immersive video rendering device according to the present principles,

Figure 22 represents a first embodiment of an immersive video rendering device according to the present principles, and

Figure 23 represents a first embodiment of an immersive video rendering device according to the present principles.

5. Detailed Description

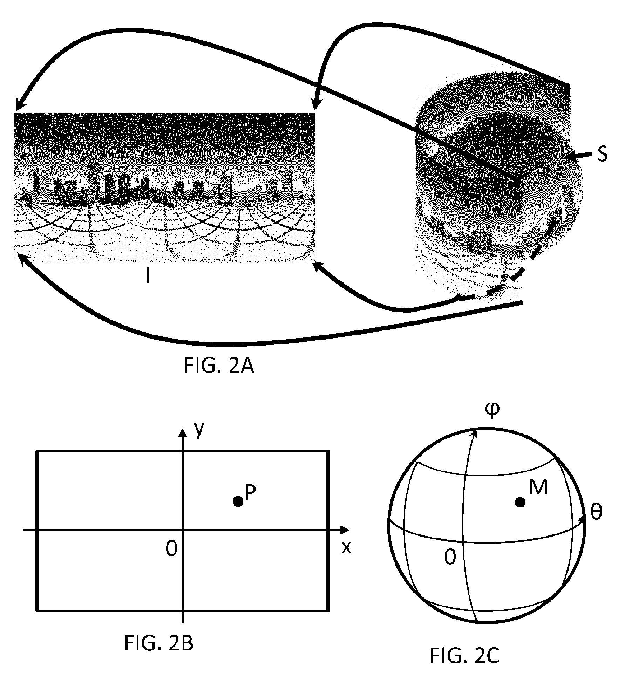

Figure 2A shows an example of projection from a surface S represented as a sphere onto one single rectangular picture I using an equi-rectangular projection. Figures 2B and 2C show respectively the coordinate reference systems for the picture I and the sphere S.

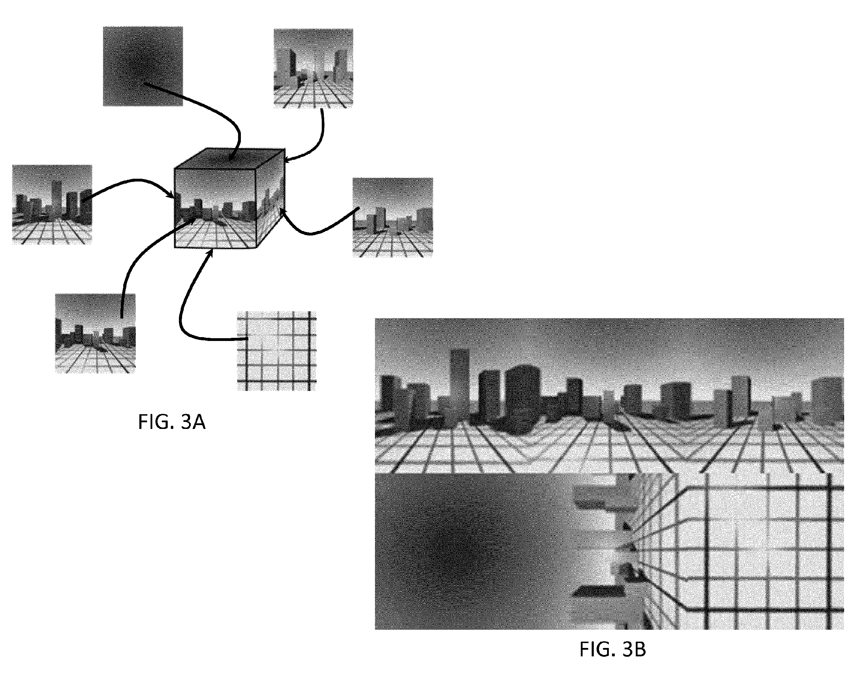

Figure 3A shows another example of projection from the surface S, here represented as a cube, onto six pictures or faces. The faces can possibly be re-arranged into one single picture as shown in figure 3B.
In an equi-rectangular projection, a relationship between the Cartesian co-ordinates on the XY-plane of the rectangular picture (shown in figure 2B) and the angular co-ordinates on the sphere (shown in figure 2C) is given as:

$$y = \varphi/\pi, \; -0.5 \leq y \leq 0.5, \; -\pi/2 \leq \varphi \leq \pi/2$$

$$x = \theta/2\pi, \; 0 \leq x \leq 1, \; 0 \leq \theta \leq 2\pi$$

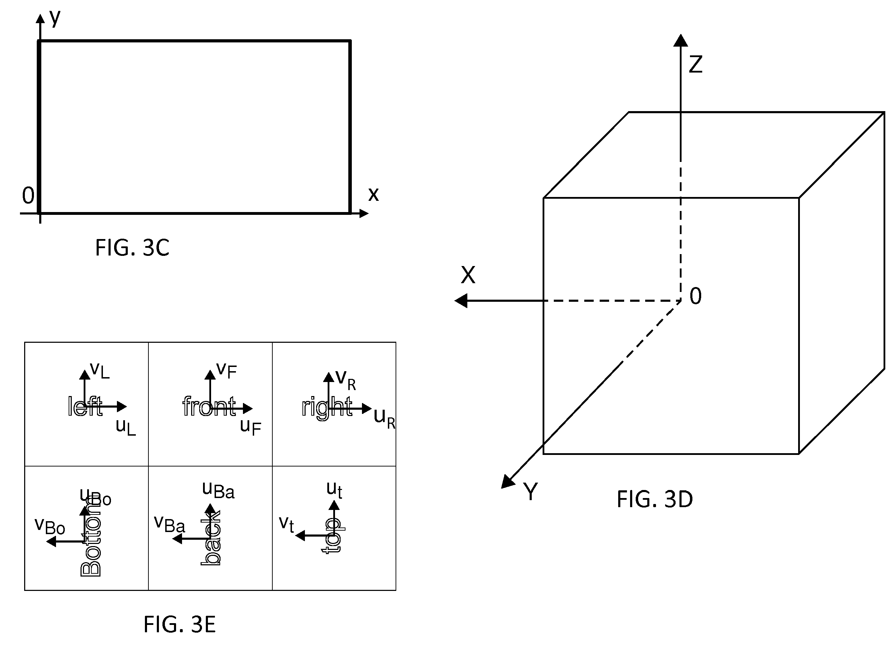

In a cube projection, a relationship between the co-ordinates on the XY-plane of a rectangular picture with coordinate reference system shown in figure 3C and the co-ordinates on the cube with coordinate reference system shown in figure 3D is given as:

$$f\begin{cases} Left: x < w, y > h: u = \dfrac{2x}{w} - 1, v = \dfrac{2(y-h)}{h} - 1 \ , k = 0 \\[2mm] front: w < x < 2w, y > h: u = \dfrac{2(x-w)}{w} - 1, v = \dfrac{2(y-h)}{h} - 1, k = 1 \\[2mm] right: 2w < x, y > h: u = \dfrac{2(x-2w)}{w} - 1, v = \dfrac{2(y-h)}{h} - 1, k = 2 \\[2mm] bottom: x < w, y < h: u = \dfrac{2y}{h} - 1, v = \dfrac{2(w-x)}{w} - 1, k = 3 \\[2mm] back: w < x < 2w, y < h: u = \dfrac{2y}{h} - 1, v = \dfrac{2(2w-x)}{w} - 1, k = 4 \\[2mm] top: 2w < x, y < h: u = \dfrac{2y}{h} - 1, v = \dfrac{2(3w-x)}{w} - 1, k = 5 \end{cases}$$

with the corresponding layout of the six faces in the rectangular picture shown in figure 3E. The co-ordinate $k$ denotes the face number and ($u, v$), where $u, v \in$ [-1,1], denote the coordinates on the face $k$. A face of the cube is of width w and of height $h$.

In traditional video codecs, a quantization parameter (QP) and sometimes weight matrices are used for quantizing transform coefficients of prediction residual a block from a 2D picture to encode. The choice of the QP value and weight matrices directly impacts the quantization step size (Qstep), and hence the SNR (Signal to Noise Ratio) or the quality of the frame reconstructed from such quantized transform coefficients. In addition, such parameters also allow to control the bitrate of the compressed bit stream. Therefore, the choice of the QP value and the weight matrices affects the trade-off between the quality and the bitrate of a coded video.

In standards such as HEVC or H.264/AVC, a frame is encoded by first being divided into small non-overlapping blocks and then those blocks are encoded individually. The decoder, consequently, decodes a frame by decoding the individual blocks from the compressed bitstream. Since the blocks are processed and rendered individually, the QP value and weight matrices are decided on a block basis. The existing standards allow these parameters to remain constant over a picture or change from block to block for better rate-distortion performance.

In a 2D picture representative of a picture from an omnidirectional video, blocks at different locations in the picture have high degrees of redundancies or periodicities among them because of the projection onto the rectangular 2D frame. Consequently, keeping the quantization constant for all the blocks in a frame would result in a higher bitrate than is necessary for a given quality after rendering in a 3D surface, for instance in a sphere. Furthermore, the same quantization applied to a block of the 2D picture may result in different quality for a corresponding block of the 3D surface according to the projection method used to project the block of the 3D surface onto a 2D picture.

Thus, there is a need for a new method and apparatus of encoding and decoding omnidirectional videos.

A large field-of-view content may be, among others, a three-dimension computer graphic imagery scene (3D CGI scene), a point cloud or an immersive video. Many terms might be used to design such immersive videos such as for example virtual Reality (VR), 360, panoramic, $4\pi$, steradians, immersive, omnidirectional, large field of view.

An immersive video typically refers to a video encoded on a rectangular frame that is a two-dimension array of pixels (i.e., element of color information) like a "regular" video. In many implementations, the following processes may be performed. To be rendered, the frame is, first, mapped on the inner face of a convex volume, also called mapping surface (e.g., a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

Pixels may be encoded according to a mapping function in the frame. The mapping function may depend on the mapping surface. For a same mapping surface, several mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. Existing encoding and decoding methods usually do not take specificities of immersive videos into account. Indeed, as immersive videos can be 360°videos, a panning, for example, introduces motion and discontinuities that require a large amount of data to be encoded while the content of the scene does not change. Taking immersive videos specificities into account while encoding and decoding video frames would bring valuable advantages to the encoding or decoding methods.

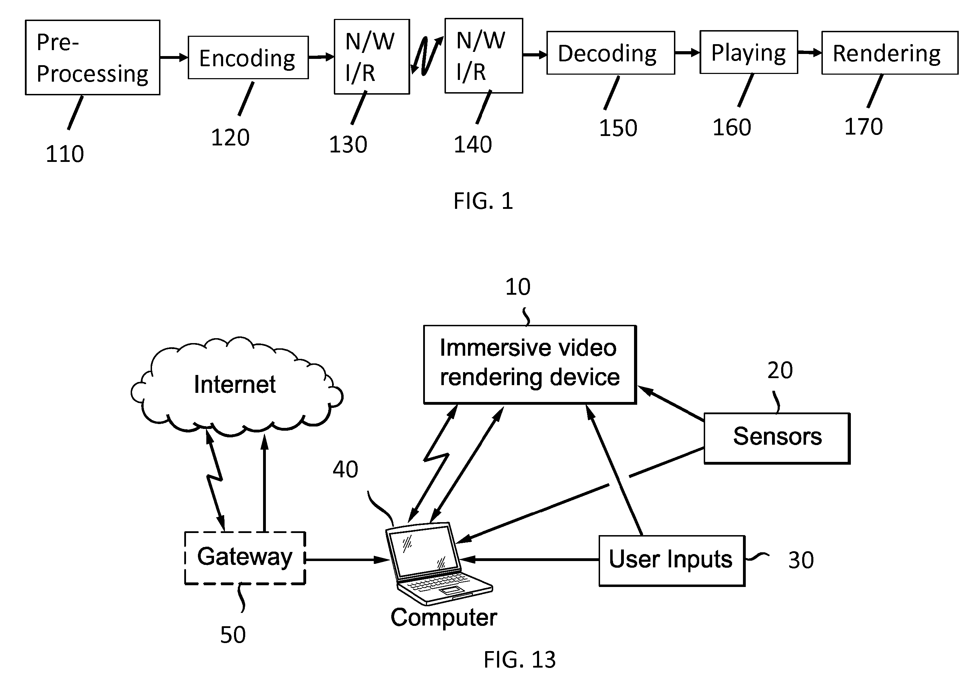

Figure 1 illustrates a general overview of an encoding and decoding system according to an example embodiment. The system of figure 1 is a functional system. A pre-processing module 110 may prepare the content for encoding by the encoding device 120. The pre-processing module 110 may perform multi-image acquisition, merging of the acquired multiple images in a common space (typically a 3D sphere if we encode the directions), and mapping of the 3D sphere into a 2D frame using, for example, but not limited to, an equirectangular mapping or a cube mapping. The pre-processing module 110 may also accept an omnidirectional video in a particular format (for example, equirectangular) as input, and pre-processes the video to change the mapping into a format more suitable for encoding. Depending on the acquired video data representation, the pre-processing module 110 may perform a mapping space change.

The encoding device 120 and the encoding method will be described with respect to other figures of the specification. After being encoded, the data, which may encode immersive video data or 3D CGI encoded data for instance, are sent to a network interface 130, which can be typically implemented in any network interface, for instance present in a gateway. The data are then transmitted through a communication network, such as internet but any other network can be foreseen. Then the data are received via network interface 140. Network interface 140 can be implemented in a gateway, in a television, in a set-top box, in a head mounted display device, in an immersive (projective) wall or in any immersive video rendering device.

After reception, the data are sent to a decoding device 150. Decoding function is one of the processing functions described in the following figures 13 to 23. Decoded data are then processed by a player 160. Player 160 prepares the data for the rendering device 170 and may receive external data from sensors or users input data. More precisely, the player 160 prepares the part of the video content that is going to be displayed by the rendering device 170. The decoding device 150 and the player 160 may be integrated in a single device (e.g., a smartphone, a game console, a STB, a tablet, a computer, etc.). In other embodiments, the player 160 may be integrated in the rendering device 170.

Several types of systems may be envisioned to perform the decoding, playing and rendering functions of an immersive display device, for example when rendering an immersive video.

A first system, for processing augmented reality, virtual reality, or augmented virtuality content is illustrated in figures 13 to 17. Such a system comprises processing functions, an immersive video rendering device which may be a head mounted display (HMD), a tablet or a smartphone for example and may comprise sensors. The immersive video rendering device may also comprise additional interface modules between the display device and the processing functions. The processing functions can be performed by one or several devices. They can be integrated into the immersive video rendering device or they can be integrated into one or several processing devices. The processing device comprises one or several processors and a communication interface with the immersive video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as a IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system comprises an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may be embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g., a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using figures 13 to 17, several embodiments are described of this first type of system for displaying augmented reality, virtual reality, augmented virtuality or any content from augmented reality to virtual reality.

Figure 13 illustrates a particular embodiment of a system configured to decode, process and render immersive videos. The system comprises an immersive video rendering device 10, sensors 20, user inputs devices 30, a computer 40 and a gateway 50 (optional).

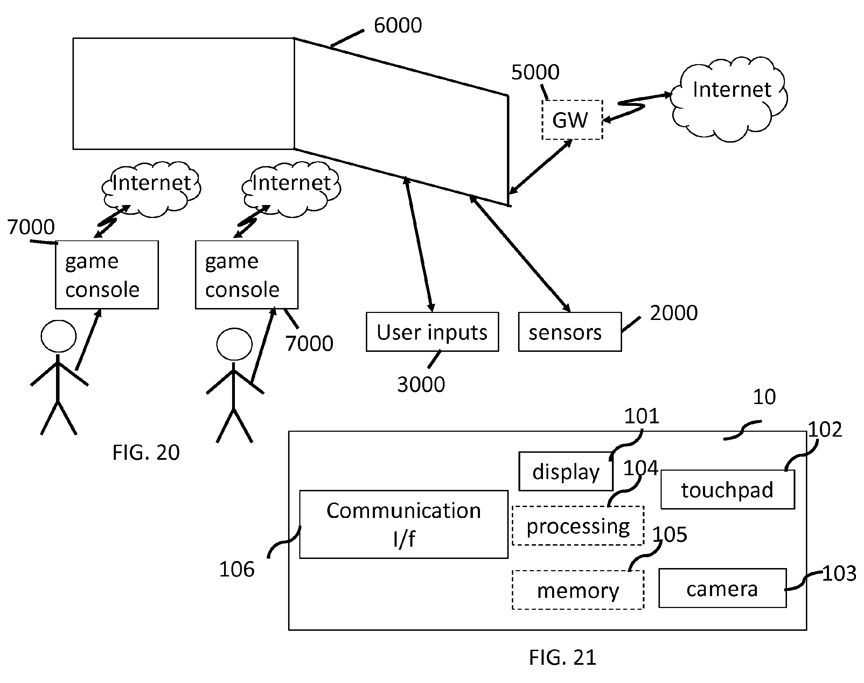

The immersive video rendering device 10, illustrated in figure 21, comprises a display 101. The display is, for example of OLED or LCD type. The immersive video rendering device 10 is, for instance a HMD, a tablet or a smartphone. The device 10 may comprise a touch surface 102 (e.g., a touchpad or a tactile screen), a camera 103, a memory 105 in connection with at least one processor 104 and at least one communication interface 106. The at least one processor 104 processes the signals received from the sensors 20.

Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Data from sensors 20 and user input devices 30 can also be transmitted to the computer 40 which will process the data according to the input of these sensors.

Memory 105 includes parameters and code program instructions for the processor 104. Memory 105 can also comprise parameters received from the sensors 20 and user input devices 30. Communication interface 106 enables the immersive video rendering device to communicate with the computer 40. The communication interface 106 of the processing device may be wireline interfaces (for example a bus interface, a wide area network interface, a local area network interface) or wireless interfaces (such as a IEEE 802.11 interface or a Bluetooth® interface).

Computer 40 sends data and optionally control commands to the immersive video rendering device 10. The computer 40 is in charge of processing the data, i.e., prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g., decodes them and possibly prepares the part of the video content that is going to be displayed by the immersive video rendering device 10) and sends the processed data to the immersive video rendering device 10 for display. In another embodiment, the system may also comprise local storage (not represented) where the data representative of an immersive video are stored, said local storage can be on the computer 40 or on a local server accessible through a local area network for instance (not represented).

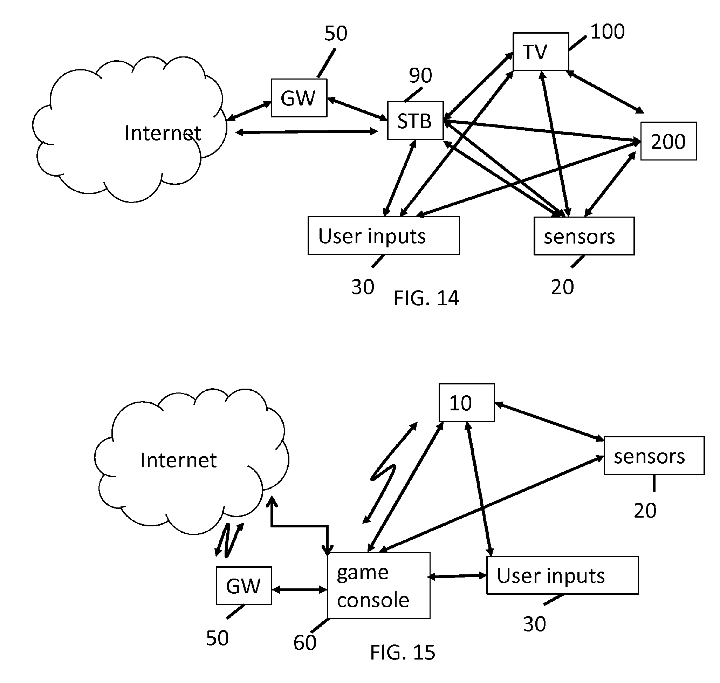

Figure 14 represents a second embodiment. In this embodiment, a STB 90 is connected to a network such as internet directly (i.e., the STB 90 comprises a network interface) or via a gateway 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to figure 13. The STB 90 obtains the data representative of the immersive video from the internet. In another embodiment, the STB 90 obtains the data representative of the immersive video from a local storage (not represented) where the data representative of the immersive video are stored.

Figure 15 represents a third embodiment related to the one represented in figure 13. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In another embodiment, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g., decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

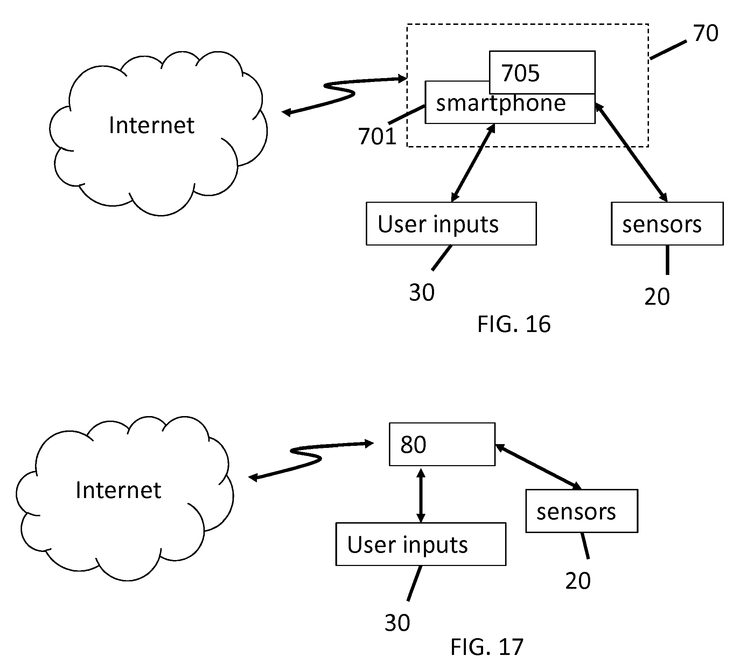

Figure 16 represents a fourth embodiment of said first type of system where the immersive video rendering device 70 is formed by a smartphone 701 inserted in a housing 705. The smartphone 701 may be connected to internet and thus may obtain data representative of an immersive video from the internet. In another embodiment, the smartphone 701 obtains data representative of an immersive video from a local storage (not represented) where the data representative of an immersive video are stored, said local storage can be on the smartphone 701 or on a local server accessible through a local area network for instance (not represented).

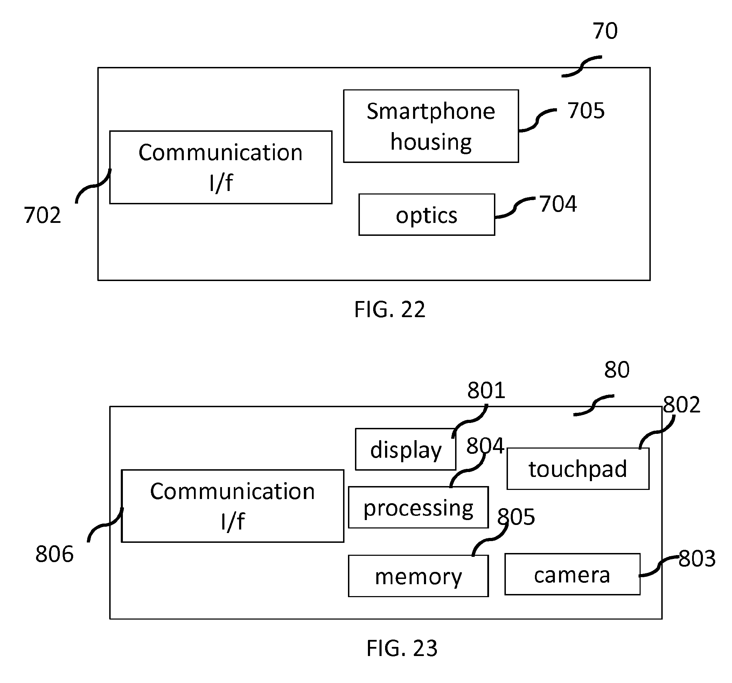

Immersive video rendering device 70 is described with reference to figure 22 which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore no display other than the one of the smartphone 701 is included. However, optics 704, such as lenses, are included for seeing the data on the smartphone display. The smartphone 701 is configured to process (e.g., decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

Figure 17 represents a fifth embodiment of said first type of system in which the immersive video rendering device 80 comprises all functionalities for processing and displaying the data content. The system comprises an immersive video rendering device 80, sensors 20 and user input devices 30. The immersive video rendering device 80 is configured to process (e.g., decode and prepare for display) data representative of an immersive video possibly according to data received from the sensors 20 and from the user input devices 30. The immersive video rendering device 80 may be connected to internet and thus may obtain data representative of an immersive video from the internet. In another embodiment, the immersive video rendering device 80 obtains data representative of an immersive video from a local storage (not represented) where the data representative of an immersive video are stored, said local storage can be on the rendering device 80 or on a local server accessible through a local area network for instance (not represented).

The immersive video rendering device 80 is illustrated in figure 23. The immersive video rendering device comprises a display 801. The display can be for example of OLED or LCD type, a touchpad (optional) 802, a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. For this several types of memories can exist and memory 805 can be a single memory or can be several types of storage (SD card, hard disk, volatile or non-volatile memory...) Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

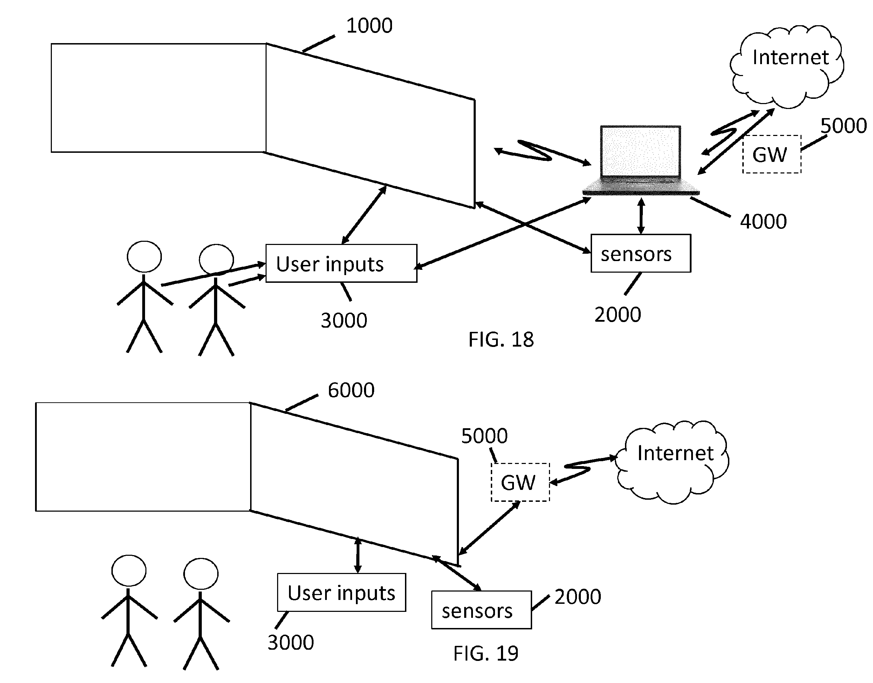

A second system, for processing augmented reality, virtual reality, or augmented virtuality content is illustrated in figures 18 to 20. Such a system comprises an immersive wall.

Figure 18 represents a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or network interface. In another embodiment, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g., position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g., decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e., preparing them for display, to be displayed by the immersive wall 1000. Processing can be done exclusively by the computer 4000 or part of the processing can be done by the computer 4000 and part by the immersive wall 1000.

Figure 19 represents another system of the second type. It comprises an immersive (projective) wall 6000 which is configured to process (e.g., decode and prepare data for display) and display the video content. It further comprises sensors 2000, user input devices 3000.

The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g., position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g., decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

Figure 20 illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed.

In one embodiment, we consider that the omnidirectional video is represented in a format that enables the projection of the surrounding 3D surface S onto a standard rectangular frame I that is represented in a format suitable for a video codec. Various projections can be used to project 3D surfaces to 2D surfaces. For example, figure 2A shows that an exemplary sphere surface S is mapped to a 2D frame I using an equi-rectangular projection, and figure 3A shows that an exemplary cube surface is mapped to a 2D frame as shown in figure 3C using a cube mapping as discussed above. Other mappings, such as pyramidal, icosahedral or octahedral mapping, can map a 3D surface into a 2D frame.

The 2D frame I can then be encoded using existing video encoders, for example, encoders compliant with VP9, VP10, MPEG-2, H.264/AVC, or H.265/HEVC. The 2D frame I can also be encoded with an encoder adaptive to the properties of omnidirectional videos, for example, using an adjusted VP9, VP10, MPEG-2, H.264/AVC, or H.265/HEVC encoder. After encoding and decoding, the decoded 2D frame can be mapped back to the corresponding 3D surface, for example, a sphere for an equi-rectangular mapping or a cube for cube mapping. The 3D surface can then be projected onto a "virtual screen" corresponding to a user's viewpoint in order to obtain the final rendered frame. The steps of decoding the 2D frame and projecting from the 3D surface to a rendered frame can be merged into a single step, where a part of the decoded frame is mapped onto the rendered frame. In the present application, we may use a projection space to refer to the rendered frame or the 3D surface to which the projection is performed onto.

For simplicity of notation, we may refer to the decoded 2D frame also as "F," and the 3D surface used in rendering also as S. It should be understood that the 2D frame to be encoded and the 2D frame to be decoded may be different due to video compression, and the 3D surface in pre-processing and the 3D surface in rendering may also be different. In the present application, we use the terms "mapping" and "projection" interchangeably, use the terms "pixel" and "sample" interchangeably, and use the terms "frame" and "picture" interchangeably.

In the following, for illustration purpose, it is assumed that the projection function to project a 3D surface onto a picture is an equi-rectangular projection but the disclosure may be applied to other projection functions.

It is also assumed here that an instant of an omnidirectional video is represented as a sphere and intensity values on the sphere are sampled and then projected onto a rectangular picture.

The number of samples for any angle $\varphi$ is same so that the intensity values can be projected on a rectangular grid.

A sampling interval for $\varphi = 0$ (or y = 0) is denoted by $\Delta_0$, and a sampling interval for $\varphi=d$ by $\Delta_d$. Then it can be shown that $\Delta_d = A_0 \cos\varphi$.

Assuming the Nyquist sampling for $\varphi=0$ is satisfied, it appears that the intensity values at $\varphi=d$ are over-sampled, i.e. for N samples at $\varphi=d$, there are K samples where K = N $\cos\varphi$. Therefore, an oversampling factor N/K can be defined as being equal to 1/$\cos\varphi$.

Current video encoders assume that the input video to encode is critically-sampled. When such an assumption is not true, a first step of a compression scheme would be to convert the over-sampled video to a critically-sampled video by downsampling the input video. This is what is usually done for the color components of the video (as in 4:2:1, 4:2:2, formats, for instance). A downsampling is done such that the down-sampled frames still remain rectangular. In the case of an omni-directional video, however, such a process would lead to different numbers of samples on rows. Therefore, the frame resulting from the projection of the 3D surface would not remain rectangular.

An operation of over-sampling in a projection can be expressed as an interpolation operation. Assuming a block-based approach, an interpolation can be expressed as a matrix multiplication. Let $S_K$ denote a column vector of K samples which are over-sampled to a column vector of $J_N$ samples, i.e N is greater than K. A relationship between $J_N$ and $S_K$ can be expressed by: $J_N = F * S_K$, where F denotes an interpolation matrix of dimension NxK. It is assumed here that the interpolation operator is suitably scaled such that the average energy of the samples is maintained. Corresponding to the interpolation operator F, there always exists a reconstruction operator G of dimension KxN that can generate $S_K$ given $J_N$ as:

$$\widehat{S_K} = G * J_N$$

Usually, in an interpolation scenario, G is lossless, that is, G*F = $I_K$, where $I_K$ denotes an identity matrix of order K. In this case, $\widehat{S_K} = S_K$.

For digital representation and in case of data compression, the samples of the column vector $J_N$ are quantized and rounded. For instance, the samples of $J_N$ are uniformly quantized with a quantization step size Qstep. If Q denotes a quantization error vector when quantizing $J_N$ with the quantization step size Qstep, an average quantization error of $J_N$ is equal to the variance of the quantization error, which is denoted here by $\sigma^2$. If $S_K$ is decoded from the quantized values of $J_N$, the average reconstruction error of $S_K$ is a scaled down version of $\sigma^2$. This is demonstrated in the following.

Let $J_{NQ}$ denote the quantized version of $J_N$, where the samples of $J_N$ are scalar quantized with quantization step size Qstep. Using an additive quantization noise model, the decoded values of $S_K$ can be expressed as:

$$\widehat{S_K} = G * J_{N_Q} \triangleq G * (J_N + Q)$$

Hence the reconstruction error of $S_K$ is given as:

$$e \triangleq S_K - \widehat{S_K} = -G * Q.$$

Assuming that the samples of Q are uncorrelated, it can be shown that the mean square reconstruction error of $S_K$ is equal to $(\sigma^2/K)*tr(G^tG)$ where $tr()$ denotes the trace operator of a square matrix, the superscript t denotes the matrix transposition.

When the interpolation operator is orthonormal, that is, when F has orthonormal columns, the mean square reconstruction error is equal to $(K/N)*\sigma^2$. It can be shown from *"Frame-theoretic analysis of DFT codes with erasures"*, G. Rath, C. Guillemot , *IEEE Transactions on Signal Processing"*, volume 52 n°2, February 2004*, that this is the minimum reconstruction error achievable with any interpolation operator. That is, the reconstruction error achieved with any other interpolation operator will be always more than or equal to this value.

In a high rate uniform quantization case: $\sigma^2 = (1/3)*Qstep^2$.

Thus, in this case, the mean square reconstruction error with orthonormal interpolation is equal to $\dfrac{K*Qstep^2}{3N}$.

Now applying the above principle to the equi-rectangular projection, for instance from the surface S onto the picture I shown on figure 2A, the average reconstruction error at any angle $\varphi = d$ from S is a scaled down version of the average reconstruction error at angle $\varphi = 0$. If a row of pixels for an angle $\varphi = d$ of the surface S is downsampled to a critically sampled version, or equivalently, if a same level of quantization error at angles $\varphi = d$ and $\varphi = 0$ is desired, then the quantization step size for the oversampled pixels shall be scaled up by a factor of $\sqrt{N/K}$. For the equi-rectangular projection, the scale factor $(K/N)$ is equal to $\cos\varphi$. Therefore, to have similar distortions at angles $\varphi = d$ and $\varphi = 0$, the quantization step size Qstep shall be increased by a factor of $\sqrt{\dfrac{1}{\cos\varphi}}$, which is also equal to $\sqrt{\dfrac{1}{\cos(\pi y)}}$.

In a general projection case, the scale factor will depend on the projection function used for the equi-rectangular projection. The scale factor can be estimated based on the following model. An average reconstruction error at a pixel location (x,y) of a picture can be modelled as:

$$r_{(x,y)}^{2} = a(x,y) * r_{(0,0)}^{2}$$

where $a(x, y)$, $0 < a(x, y) \leq 1$, is a parameter that depends on the projection function and the location of the pixel on the picture. Here, the quantization step size Qstep needs to be increased by the factor $\sqrt{\dfrac{1}{a(x,y)}}$ to maintain the same level of quantization error at different locations.

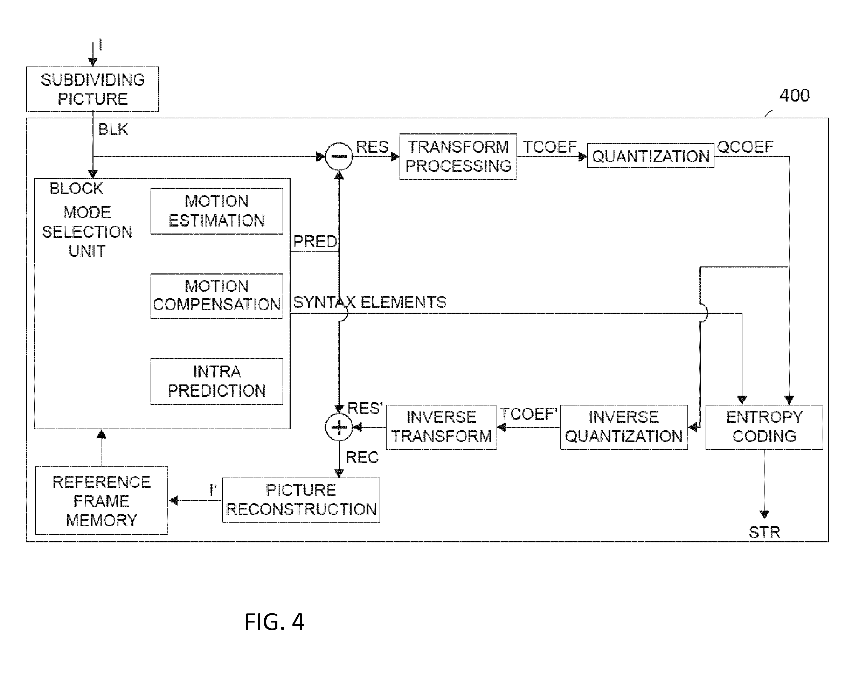

Figure 4 is a schematic block diagram illustrating an exemplary video encoder 400 in which the present principle could be implemented. Such a video encoder 400 performs the encoding into a bitstream of a set of pictures representative of a projection of an omnidirectional video, according to an embodiment of the present principle. The video encoder 400 performs the encoding of the pictures according to any video coding standards such as H.266, HEVC/H.265, AVC/H.264 or any proprietary video coding system.

Classically, the video encoder 400 may include several modules for block-based video encoding, as illustrated in figure 4. A picture I to be encoded is input to the encoder 400.

First, a subdividing module divides the picture I into a set of units of pixels, which will be called blocks for simplicity. Depending on the video coding standard used, the units of pixels delivered by the subdividing module may be macroblocks (MB) such as in H.264/AVC or Coding Tree Unit (CTU) such as in HEVC.

According to an H.264/AVC coder, a macroblock comprises a 16x16 block of luminance samples and in the usual case of 4:2:0 color sampling, two corresponding 8x8 blocks of chroma samples. A macroblock of size 16x16 pixels may itself be subdivided into subblocks of size ranging from 8x8 to 4x4 pixels. Prediction of luminance and chrominance samples then applies at the macroblock level or at the subblock level if the macroblock is further subdivided. Transformation of residual prediction blocks applies on transform block of size 8x8 or 4x4 samples.

According to an HEVC coder, a coding tree unit comprises a coding tree block (CTB) of luminance samples and two coding tree blocks of chrominance samples and corresponding syntax elements regarding further subdividing of coding tree blocks. A coding tree block of luminance samples may have a size of 16x16 pixels, 32x32 pixels or 64x64 pixels. A coding tree block can be further subdivided into smaller blocks (known as coding blocks CB) using a tree structure and quadtree-like signaling. The root of the quadtree is associated with the coding tree unit. The size of the luminance coding tree block is the largest supported size for a luminance coding block. One luminance coding block and ordinarily two chrominance coding blocks form a coding unit (CU). A coding tree unit may contain one coding unit or may be split to form multiple coding units, and a coding unit having an associated partitioning into prediction units (PU) and a tree of transform units (TU). The decision whether to code a picture area using inter-picture or intra-picture prediction is made at the coding unit level. A prediction unit partitioning structure has its root at the coding unit level. Depending on the basic prediction-type decision, the luminance and chrominance coding blocks can then be further split in size and predicted from luminance and chrominance prediction blocks (PB). The HEVC standard supports variable prediction block sizes from 64x64 down to 4x4 samples. The prediction residual is coded using block transforms. A transform unit (TU) tree structure has its root at the coding unit level. The luminance coding block residual may be identical to the luminance transform block or may be further split into smaller luminance transform blocks. The same applies to chrominance transform blocks. A transform block may have size of 4x4, 8x8, 16x16 or 32x32 samples.

The encoding process is described below as applying on a unit of pixels that is called a block BLK. Such a block BLK may correspond to a macroblock, or a coding tree unit, or any subblock from one of the units described above, or any other layout of subdivision of picture I comprising luminance samples and chrominance samples, or luminance samples only.

The encoding and decoding processes described below are for illustration purposes. According to some embodiments, steps of the encoding or decoding processes may be added, or removed or may vary from the following processes. However, the principle disclosed herein could still be applied to these embodiments.

The encoder 400 then performs encoding of the blocks of the picture I as follows.

The encoder 400 comprises a mode selection unit for selecting a coding mode for a block BLK of a picture to be coded, e.g. based on a rate/distortion optimization. Such a mode selection unit comprising:

- a motion estimation module for estimating motion between one current block of the picture to be coded and reference pictures,
- a motion compensation module for predicting the current block using the estimated motion,
- an intra prediction module for spatially predicting the current block.

The mode selection unit may also decide whether subdivision of the block is needed according to rate/distortion optimization for instance. In that case, the mode selection unit then operates on a subblock of the block BLK.

Once a coding mode is selected for the block BLK, the mode selection unit delivers a predicted block PRED and corresponding syntax elements to be coded in the bitstream for performing the same block prediction at the decoder.

A residual block RES is then obtained by subtracting the predicted block PRED from the original block BLK. The residual block RES is then transformed by a transform processing module delivering a transform block TCOEF of transformed coefficients. In case, the transform processing module operates on transform blocks of size smaller than the residual block RES, the transform processing module delivers a set of corresponding transform blocks TCOEF. For instance, a rate/distortion optimization may be performed to decide whether large transform block or smaller transform block should be used.

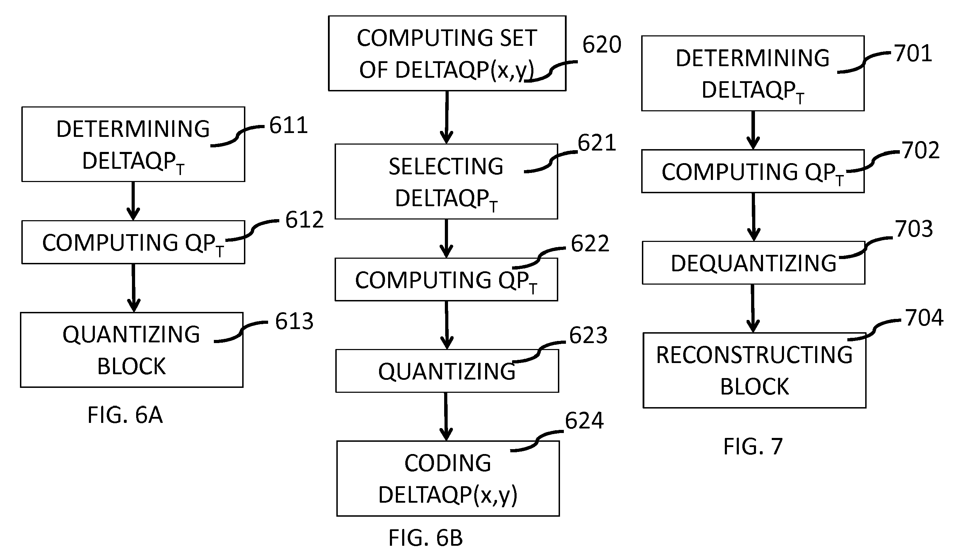

A delivered transform block TCOEF is then quantized by a quantization module delivering a quantized transform block QCOEF of quantized residual transform coefficients. The quantization process is further detailed below in reference to figures 6A and 6B.

The syntax elements and quantized residual transform coefficients of the block QCOEF are then inputted to an entropy coding module to deliver the coded video data of the bitstream STR.

The quantized residual transform coefficients of the quantized transform block QCOEF are processed by an inverse quantization module delivering a block TCOEFF' of dequantized transform coefficients or a set of blocks TCOEF' when the residual block RES has been transformed using smaller size transform blocks. The block or blocks TCOEF' is/are passed to an inverse transform module for reconstructing a block of residual prediction RES'.

A reconstructed version REC of the block BLK is then obtained by adding the prediction block PRED to the reconstructed residual prediction block RES'. The reconstructed block REC is stored in memory for later use by a picture reconstruction module for reconstructing a decoded version I' of the picture I. Once all the blocks BLK of the picture I have been coded, the picture reconstruction module performs reconstruction of a decoded version I' of the picture I from the reconstructed blocks REC. Optionally, deblocking filtering and SAO (Sample Adaptive Offset) may be applied to the reconstructed picture I' for removing blocking artifacts and other compression artifacts in reconstructed blocks. The reconstructed picture I' is then added to a reference frame memory for later use as a reference picture for encoding the following pictures of the set of pictures to code.

The bitstream generated from the above-described encoding process is then transmitted over a data network or stored on a memory for immersive rendering of an omnidirectional video decoded from the bitstream STR.

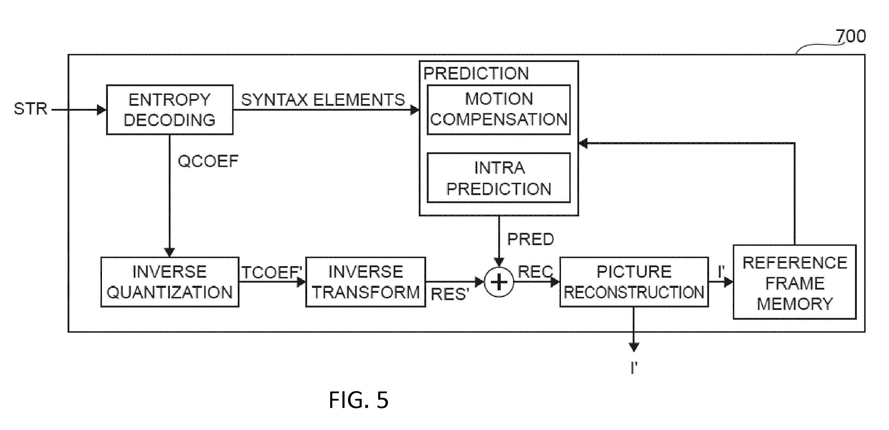

Figure 5 is a schematic block diagram illustrating an exemplary video decoder adapted to decode a bitstream encoded using the present principle. A bitstream STR representative of coded pictures representative of a projection of an omnidirectional video onto said pictures, comprises coded data representative of at least one block BLK of said pictures. Such a block has been coded according to an embodiment of the present disclosure.

According to an embodiment, the bitstream STR may also comprise coded data representative of parameters for quantizing computed at the encoder and used for quantizing the transform coefficients of the transform block of the pictures according to an embodiment of the present disclosure which will be described in reference to figures 7-9.

The video decoder 700 performs the decoding of the pictures according to any video coding standards such as H.266, HEVC/H.265, AVC/H.264 or any proprietary video coding system.

The video decoder 700 performs the reconstruction of the omnidirectional video by decoding from the bitstream the coded pictures on a picture-by-picture basis and decoding a picture on a block-by-block basis. According to video compression standards used, parallel processing may be used for decoding the bitstream either on a picture basis or on a block basis. A picture I' is thus reconstructed from the compressed bitstream as follows.

The coded data is passed to the video decoding modules of the video decoder 700. As illustrated in figure 5, coded data is passed to an entropy decoding module that performs entropy decoding and delivers a block QCOEF of quantized transform coefficients to an inverse quantization module and syntax elements to a prediction module.

The block QCOEF of quantized transform coefficients is inverse quantized by the inverse quantization module to deliver a block TCOEF' of dequantized transform coefficients. The inverse quantization process is further described below in reference to figures 7-9 according to different embodiments.

The block TCOEF' of dequantized transform coefficients is inverse transformed by an inverse transform module delivering a residual prediction block RES'. When smaller size transform blocks TCOEF' have been used for transforming a residual prediction block, the residual prediction block RES' is delivered when all the transform blocks TCOEF' forming the residual prediction block have been dequantized and inverse transformed.

The prediction module builds a prediction block PRED according to the syntax element and using a motion compensation module if a current block has been inter-predicted or an intra-prediction module if the current block has been spatially predicted.

A reconstructed block REC is then obtained by adding the prediction block PRED to the reconstructed residual prediction block RES'. The reconstructed block REC is stored in memory for later use by a picture reconstruction module for reconstructing a decoded picture I'. Once all the blocks of the picture I have been decoded, the picture reconstruction module performs reconstruction of the decoded picture I' from the reconstructed blocks REC. Optionally, deblocking filtering may be applied to the reconstructed picture I' for removing blocking artifacts between reconstructed blocks. The reconstructed picture I' is then added to a reference frame memory for later use as a reference picture for decoding the following pictures of the set of pictures to decode.

The reconstructed picture I' is then stored on a memory or output by the video decoder apparatus 700 to an immersive rendering device (10) as disclosed above. The video decoder apparatus 700 may also be comprised in the immersive rendering device (80). In that case, the reconstructed picture I' is output by the decoder apparatus to a display module of the immersive rendering device (80).

According to the immersive rendering system implemented, the disclosed decoder apparatus may be comprised in any one of the processing devices of an immersive rendering system such as disclosed herein for instance, in a computer (40), or a game console (60), or a smartphone (701), or an immersive rendering device (80), or an immersive wall (6000).

The apparatus decoder 700 may be implemented as hardware or software or a combination of hardware and software thereof.

The quantization process and dequantization process from figures 4 and 5 according to the principle disclosed herein are further described below.

The relationship of the average error reconstruction depending on the pixel location and the projection function is also valid if the pixels are intra/inter predicted such as in H.264/AVC, HEVC standards or others standards. In such standards, as described in reference to figures 4 and 5, the transform coefficients of the residual prediction error undergo quantization using a suitable QP value and weight matrices. As shown below, the average error of the reconstructed pixels is the same as the average quantization error of the residual error at the decoder after inverse transform is applied.

Let $\hat{J}$ denote the intra/inter predicted pixels for the pixels in vector $J$, and let e denote the residual error vector. Therefore, $J = \hat{J} + e$. Let $T$ and $E$ denote the transform matrix and the transform coefficients of e, respectively. If $Q$ denotes the quantization vector, the decoded pixels $\tilde{J}$ can be expressed as $\tilde{J} = \hat{J} + T^{-1}(E + Q) = \hat{J} + e + T^{-1}Q$. Therefore the reconstruction error is given as $J - \tilde{J} = -T^{-1}Q$. Since the transforms are orthogonal, the average reconstruction error is $\sigma^2$, the variance of the components of $Q$, which is the same as the average reconstruction error of the residual vector. Therefore the principle of oversampling disclosed herein still remains valid.

According to an embodiment, the principle disclosed herein is applied to a parameter for quantizing defined as a QP value in current block-based known standards, such as H.264/AVC, HEVC, or others.

In such standards, a quantization step size *Qstep* is determined from a QP value using the following relationship:

$$Qstep(QP) = 2^{\frac{QP-4}{6}}.$$ Even if, the quantization step size *Qstep* may be derived from the QP value using another relationship, the principle of the present disclosure will still apply.

For 8-bit video sequences, the QP value may take 52 values from 0 to 51. The above relationship can be equivalently expressed as: $QP = 4 + 6 * \log_2(Qstep)$. Thus, if the $Qstep$ needs to be increased by any factor M, the $QP$ value is then increased by $6 * \log_2 M$.

Hence, in the case of a surface S represented by a sphere as in figure 2A, to increase the quantization step size $Qstep$ by the factor $\sqrt{(\frac{1}{\cos(\pi y)})},$ the QP value is increased by $3 * \log_2(\frac{1}{\cos(\pi y)}).$ Therefore, the QP value can be expressed as a function of $y$ by:

$$QP_y = QP_0 - 3 * \log_2(\cos(\pi y))$$

where $QP_0$ denotes a base QP value chosen at $y = 0$. The above equation will increase the QP value to indefinite values as the logarithmic function will decrease boundlessly for $y \to \pm\frac{\pi}{2}.$ Therefore, the QP value $QP_y$ needs to be bounded using the maximum value of QP value which is 51. Furthermore, in such codecs, the QP value has an integral value. Therefore, the above expression is modified as:

$$QP_y = \min(QP_0 - \lfloor 3 * \log_2(\cos(\pi y)) \rfloor, QP_{max}) \qquad (1)$$

where $QP_{max}$ is the maximum value of QP value, and the operator $\lfloor \rfloor$ is the integer function. It appears that in the case of an equi-rectangular projection from a sphere, the QP value for a pixel depends on the position of the pixel along the y axis.

In a general projection case, the QP value can be given as:

$$QP(x,y) = \min(QP_0 - \lfloor 3 * \log_2(a(x,y)) \rfloor, QP_{max}) \qquad (2)$$

where the parameter $a(x,y)$ depends on the projection function. It appears that in a general projection case, the QP value for a pixel depends on the location (x,y) of the pixel in the picture I.

The QP value from Eq. (1) or (2) can thus be expressed as:

$$QP(x,y) = \min(QP_0 - deltaQP(x,y), QP_{max}) \qquad (3)$$

where deltaQP(x,y) corresponds to:

$$deltaQP(x,y) = \lfloor 3 * \log_2(\cos(\pi y)) \rfloor, \text{ or} \qquad (4)$$

$$deltaQP(x,y) = \lfloor 3 * \log_2(a(x,y)) \rfloor, \qquad (5)$$

depending on the projection function.

Figure 6A illustrates a flow diagram for an exemplary method for coding at least one block of pixels from a picture according to an embodiment of the present disclosure. In step 611, a quantization parameter $deltaQP_T$ is determined for a block TCOEF of transform coefficients obtained from said block of pixels BLK. The quantization parameter $deltaQP_T$ is determined according to a spatial position of the block of pixels in said picture.

According to the embodiment disclosed herein, a quantization parameter $deltaQP_T$ may be computed for the block BLK according to Eq. (4) or (5) depending on the projection function used. For instance, a value a(xc,yc) of the projection function computed for the center (xc,yc) of the block may be used in Eq. (5), or a value of an average for the values of the projection function computed for every pixels of the block may be used in Eq(5).

Other embodiments are possible for determining the quantization parameter. Further details for another embodiment are given in reference to figure 6B.

In step 612, once a quantization parameter $deltaQP_T$ is selected for the transform block, a quantization parameter $QP_T$ is computed for the transform block using Eq. (3). In Eq. (3), $QP_0$ is a base QP value defined for a point of reference of the projection of the surface S, for instance in the case of equi-rectangular projection and a surface S represented as a sphere, $QP_0$ is a QP value assigned to angle $\varphi = 0$. In the case of a general projection with projection function a(x,y), for instance the point of reference may be the origin at location (0,0) in the projected pictures. For instance, the base QP value $QP_0$ may be a QP value assigned by the encoder for the picture I.

In step 613, the transform block is then quantized by the computed $QP_T$ value. For instance, a straight forward quantization for a video encoder based on an HEVC standard can be implemented as, for all sample (x,y) of the transform block:

$$TransCoeffLevel[\,xTbY\,][\,yTbY\,][\,cIdx\,][\,x\,][\,y\,] =$$

$$sign(TransformCoeff[xTbY][yTbY][cIdx][x][y]) *$$

$$\left(\left(\left(abs(TransformCoeff[xTbY][yTbY][cIdx][x][y]) * f[QP_T\%6] * \frac{16}{m[x][y]} + offset\right) \gg \right.\right.$$

$$\left.\left.\frac{QP_T}{6}\right) \gg shift\right),$$

where

- *TransformCoeff* is a matrix storing the transformed coefficients of picture I,
- (*xTbY*, *yTbY*) are the coodinates of the top-left sample of the current lumimance transform block (TCOEF) relative to the top-left luminance sample of the current picture I,
- *cIdx* is the index of the color component,
- *TransCoeffLevel*[*xTbY*][*yTbY*][*cIdx*][*x*][*y*] is the quantized transform coefficient,
- *m*[*x*][*y*] = *ScalingFactor*[*sizeId*][*matrixId*][*x*][*y*]
- *ScalingFactor*[*sizeId*][*matrixId*][*x*][*y*],with *x, y* = 0.. (1 << (2 + *sizeId* ) ) - 1, specifies an array of scaling factors according to the block size (sizeId) and the coding mode of the block and component index represented by the index *matrixId,*
- *f[QP_T%6]* being chosen according to index $QP_T\%6$ from *f=* [$f_0$, $f_1$,$f_2$, $f_3$, $f_4$, $f_5$]= [26214,23302,20560,18396,16384,14564],
- offset and shift being default values defined for performing the quantization operation using only addition and shifting operations.

Step 613 delivers a block of quantized transform coefficient QCOEF which is then passed to an entropy coding module such as described in figure 4 for generating coded video data of bitstream STR.

Figure 6B illustrates a block diagram for an exemplary method for quantizing a transform block TCOEFF of the picture I according to another embodiment of the present disclosure. In step 620, at least one quantization parameter deltaQP(x,y) is computed for at least one pixel of said picture I according to said projection function.

According to an embodiment, the quantization parameter deltaQP(x,y) is a difference from a QP value QP(x,y) for said at least one pixel and a base QP value $QP_0$, a QP value being associated with a quantization step size $Q_{step}$

by the relationship $Qstep(QP) = 2^{\frac{QP-4}{6}}$. The quantization parameter deltaQP(x,y) is computed according to Eq. (4) or (5) depending on the projection function.

According to an embodiment, a set of deltaQP(x,y) may be computed once for a set of more than one rectangular pictures representative of the omnidirectional video, using Eq. (4) or (5) depending on the projection function, and stored in memory. According to another embodiment, a set of deltaQP(x,y) is computed for an individual picture I.

Step 620 delivers a set of quantization parameters $\left\{deltaQP(x,y)^i\right\}_{i=0}^{N-1}$, with N being the number of computed quantization parameters. The number N of computed quantization parameters depends on the selection method of quantization parameter for a transform block. A straightforward implementation could be to compute a quantization parameter for every pixel (x,y) of the picture I.

In step 621, for a block TCOEF of transform coefficients obtained from said block of pixels BLK, a quantization parameter deltaQP$_T$ from the set $\{deltaQP(x,y)^i\}_{i=0}^{N-1}$ of quantization parameters is selected, depending on the spatial position of the block of pixels BLK in picture I.

According to an embodiment, the selected quantization parameter deltaQP$_T$ is a quantization parameter computed for at least one pixel of said block BLK. For instance, the selected quantization parameter deltaQP$_T$ is a quantization parameter computed for a center pixel of the block of pixels BLK. According to another example, the selected quantization parameter deltaQP$_T$ is an average sum of the quantization parameters computed for all pixels of said block BLK of pixels.

According to another embodiment wherein the projection function is an equi-rectangular projection, the selected quantization parameter deltaQP$_T$ is a quantization parameter computed for a pixel being on a same row of a center pixel of the block of pixels BLK. According to this embodiment, the quantization parameters $\{deltaQP(x,y)_i\}_{i=0}^{N-1}$ are computed according to Eq. (4). It appears from Eq. (4), that a deltaQP value computed for a pixel at position (x,y) depends on the position of the pixel along the y-axis. Therefore, according to this embodiment, only a quantization parameter for a pixel from each row of the picture needs to be computed according to Eq. (4), thus reducing computational complexity. For instance, the quantization parameter for the first pixel of each row is computed.

According to another embodiment, the selected quantization parameter deltaQP$_T$ is a quantization parameter assigned to a row index of transform blocks. According to this embodiment, only quantization parameter for one pixel of a row of transform block needs to be computed according to Eq. (4), thus further reducing computational complexity. For instance, according to this embodiment, if transform blocks are of size 8x8 pixels, one quantization parameter is computed for each row of a height of 8 pixels.

According to another embodiment, the transform block TCOEF belongs to a group of blocks comprising at least one transform block. Said group of blocks forming a block of pixels of size larger than or equal to said block of pixels is to be encoded. Said quantization parameter deltaQP$_T$ for said transform block is selected as being a quantization parameter assigned to said group of blocks.

For instance, in an H.264/AVC coder, a group of blocks corresponds to a macroblock. According to this embodiment, a quantization parameter deltaQP(x,y) is thus assigned to a macroblock. Therefore, the quantization parameter deltaQP$_T$ selected for a transform block is the quantization parameter assigned to the macroblock to which the transform block belongs.

According to another example, in an HEVC coder, a group of blocks may correspond either to a coding tree unit (CTU), a coding unit (CU) or a transform unit (TU) as described above. According to this embodiment, a quantization parameter deltaQP(x,y) may thus be assigned to each coding tree unit, or coding unit or transform unit. Therefore, the quantization parameter deltaQP$_T$ selected for a transform block is the quantization parameter assigned to the coding tree unit, or coding unit or transform unit, to which the transform block belongs.

According to another embodiment, when the projection function is an equi-rectangular projection, the quantization parameter deltaQP(x,y) assigned to a group of blocks is a quantization parameter assigned to a row index of said group of blocks.

In step 622, once a quantization parameter deltaQP$_T$ is selected for the transform block, a quantization parameter QP$_T$ is computed for the transform block using Eq. (3). In Eq. (3), QP$_0$ is a base QP value defined for a point of reference of the projection of the surface S, for instance in the case of equi-rectangular projection and a surface S represented as a sphere, QP$_0$ is a QP value assigned to angle $\varphi = 0$. In the case of a general projection with projection function a(x,y), for instance the point of reference may be the origin at location (0,0) in the projected pictures. For instance, the base QP value QP$_0$ may be a QP value assigned by the encoder for the picture I.

In step 623, the transform block is then quantized by the computed QP$_T$ value. For instance, a straight forward quantization for a video encoder based on an HEVC standard can be implemented as, for all sample (x,y) of the transform block:

$$TransCoeffLevel[\,xTbY\,][\,yTbY\,][\,cIdx\,][\,x\,][\,y\,] =$$

$$sign(TransformCoeff[xTbY][yTbY][cIdx][x][y]) *$$

$$\left(\left(\left(abs(TransformCoeff[xTbY][yTbY][cIdx][x][y]) * f[QP_T\%6] * \frac{16}{m[x][y]} + offset\right) \gg \right.\right.$$

$$\left.\left.\frac{QP_T}{6}\right) \gg shift\right),$$

where

- *TransformCoeff* is a matrix storing the transformed coefficients of picture I,
- (*xTbY*, *yTbY*) are the coodinates of the top-left sample of the current lumimance transform block (TCOEF) relative to the top-left luminance sample of the current picture I,
- *cIdx* is the index of the color component,
- *TransCoeffLevel[xTbY][yTbY][cIdx][x][y]* is the quantized transform coefficient,
- $m[x][y] = ScalingFactor[sizeId][matrixId][x][y]$
- *ScalingFactor[sizeId][matrixId][x][y],with x, y* = 0..(<< (2 + *sizeId*)) - 1, specifies an array of scaling factors according to the block size (sizeId) and the coding mode of the block and component index represented by the index *matrixId,*
- $f[QP_T\%6]$ being chosen according to index $QP_T\%6$ from f = $[f_0,f_1,f_2, \quad f_3,f_4,f_5]$ = [26214,23302,20560,18396,16384,14564],
- offset and shift being default values defined for performing the quantization operation using only addition and shifting operations.

Step 623 delivers a block of quantized transform coefficient QCOEF which is then passed to an entropy coding module such as described in figure 4 for generating coded video data of bitstream STR.

According to an embodiment of the present disclosure, in step 624, the set of computed deltaQP(x,y) is coded into the bitstream STR generated by the encoder 400 from figure 4. For example, the set of deltaQP(x,y) is coded as part of a Sequence Parameter Set (SPS) syntax element such as defined by an H.264/AVC standard or an HEVC standard.

According to another example, the set of deltaQP(x,y) is coded as part of a Picture Parameter Set (PPS) syntax element such as defined by an H.264/AVC standard or an HEVC standard. According to another example, the set of deltaQP(x,y) is coded as part of a Slice Header syntax element corresponding to the picture I, such as defined by an H.264/AVC standard or an HEVC standard.

Figure 7 illustrates a block diagram for an exemplary method for reconstructing a block of pixels from the bitstream STR representative of a coded omnidirectional video.

In step 701, a quantization parameter deltaQP$_T$ is determined for a quantized transform block QCOEFF decoded from the bitstream STR. The quantization parameter deltaQP$_T$ is determined according to a spatial position of the block of pixels to reconstruct in said picture.

According to the embodiment disclosed herein, a quantization parameter deltaQP$_T$ may be computed for the block according to Eq. (4) or (5) depending on the projection function that is used. For instance, a value a(xc,yc) of the projection function computed for the center (xc,yc) of the block may be used in Eq. (5), or a value of an average for the values of the projection function computed for every pixels of the block may be used in Eq. (5).

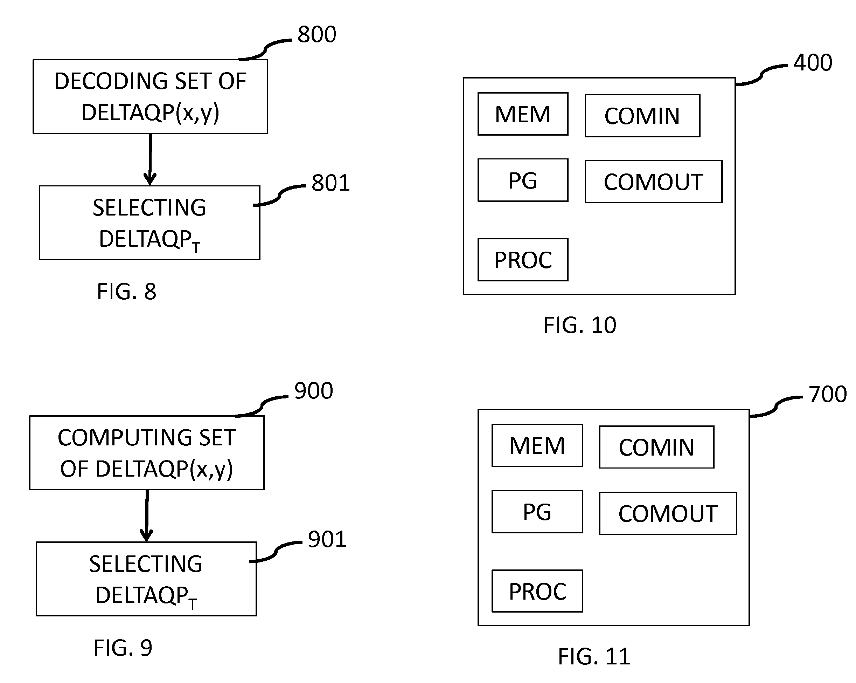

Other embodiments for determining the quantization parameter are disclosed below in reference to figures 8 and 9.

According to the embodiment described herein, the quantization parameter deltaQP$_T$ is a difference from a quantization parameter QP$_T$ value for said at least one pixel and a base quantization parameter QP$_0$, a QP value being associated with a quantization step size Q$_{step}$ by the relationship $Qstep(QP) = 2^{\frac{QP-4}{6}}$.

In step 702, a quantization parameter QP$_T$ is computed from the determined quantization parameter deltaQP$_T$ by QP$_T$ = min(QP$_0$ - deltaQP$_T$, QP$_{max}$). In step 703, the quantized transform block QCOEF is dequantized to deliver a dequantized transform block TCOEF', using the determined quantization parameter.

For instance, in the HEVC video compression standard, a dequantizing operation is performed for a coefficient (x,y) of a quantized transform block *TransCoeffLevel[xTbY][yTbY]* [*cIdx*] by

$$d[x][y]$$
$$= Clip3(coeffMin, coeffMax, ((TransCoeffLevel[xTbY][yTbY][cIdx][x][y]$$
$$* m[x][y] * levelScale[QP_T \%6] << (QP_T/6)) + (1 << (bdShift - 1)))) >$$
$$> bdShift)$$

where:

- $(xTbY, yTbY)$ are the coodinates of the top-left sample of the current luminance transform block relative to the top-left luminance sample of the current picture,
- $cIdx$ is the index of the color component,
- $d[x][y]$ is the de-quantized coefficient,
- $TransCoeffLevel[xTbY][yTbY][cIdx][x][y]$ is the quantized transform coefficient,
- the list $levelScale[\ ]$ is specified as levelScale[k] ={40, 45, 51, 57, 64, 72 } with k = 0..5,
- $m[x][y] = ScalingFactor[sizeId][matrixId][x][y]$
- $ScalingFactor[sizeId][matrixId][x][y]$, with x, y = 0..(1<<(2 + sizeId)) - 1, specifies an array of scaling factors according to the block size (sizeId) and the coding mode and component index represented by the index *matrixId,*
- $bdShift$ is a default value for performing the dequantization operation by shifting operation,
- Clip3 is a clipping function for clipping the resulting dequantized coefficient between default values *coeffMin, coeffMax.*

In step 704, a block of pixels REC is thus reconstructed from the dequantized transform block TCOEF' as described in reference with figure 5.

Figure 8 illustrates a block diagram for the determining step 701 disclosed in figure 7 according to an embodiment of the present disclosure. In step 800, a set of quantization parameters $\{deltaQP(x,y)_i\}_{i=0}^{N-1}$ is decoded from the bistream STR. Such a set of quantization parameters can be coded as part of a SPS unit or a PPS unit of the bitstream STR or as part of a slice header of the picture I.

In step 801, a quantization parameter deltaQP$_T$ is selected for the quantized transform block QCOEF from such a set of quantization parameters, depending on the position of the quantized transform block in picture I. Said selection is performed in a similar manner as it is performed on the encoding side so as to select a same quantization parameters as in the encoder.

Figure 9 illustrates a block diagram for the determining step 701 disclosed in figure 7 according to another embodiment of the present disclosure.

In step 900, a set of quantization parameters $\{deltaQP(x,y)_i\}_{i=0}^{N-1}$ is computed for the picture I. Such a step may be performed in a similar manner as the computing step 620 of the encoding method described in figure 6B. According to this embodiment, the projection function is known at both the encoder and the decoder such that both encoder and decoder can compute the same set of quantization parameters. This embodiment allows to save the bitrate since an encoder does not need to encode the set of quantization parameters into the bitstream STR.

In step 901, a quantization parameter deltaQP$_T$ is selected for the quantized transform block QCOEF from the computed set of quantization parameters, depending on the position of the quantized transform block in picture I. Said selection is performed in a similar manner as it is performed on the encoding side so as to select a same quantization parameters as in the encoder.

The encoding and decoding method have been described according to an embodiment wherein the quantization parameter is a deltaQP value.

According to another embodiment, the principle disclosed herein may be applied to the quantization/dequantization process using weight matrices used in the HEVC standard. According to this embodiment, in HEVC standard, the quantization step size QStep used for quantizing a transform block can also be changed by keeping the quantization parameter QP constant for all the transform blocks of the picture I, but using scaling factors in the quantizing process. For this, HEVC standard allows to use in the quantizing process quantization weight matrices specifying weights for different frequency coefficients.

According to this embodiment, for omnidirectional video, the quantization process, and correspondingly the dequantization process, make use of the weight matrices, such weight matrices being computed from a projection density given by the projection function.

From the projection function used for the projection of the 3D surface S onto one or more rectangular frames, a density value can be computed for each pixel of the 2D rectangular picture. Such a density value represents the amount of pixels from the 3D surface projected on a given pixel of the 2D rectangular picture. Such a density value is dependent on the projection function used to project the 3D surface on the 2D rectangular picture.

As an example, density values for a 2D rectangular picture obtained from an equi-rectangular projection of a

$$by \ D(x,y) = \frac{1}{\sqrt{cos \ \Phi}} = \frac{1}{\sqrt{cos \ (\pi y)}}.$$

sphere can be computed      As the quantization process is performed block-based, a density level $DensityIndex(xTBY,yTBY)$ can be determined for a block located at $xTBY, yTBY$. For instance, an average of all density values in the block can be used.

A weight matrix $DensityFactor[d]$ is then defined for value d of density level, d ranging from [0, $NbDensityLevel$ - 1], where NbDensityLevel is the maximum number of density values in the 2D rectangular picture. Then the quantization process and corresponding dequantization process are applied as disclosed above, for instance using the following equations:

for quantization process:

$$TransCoeffLevel[\,xTbY\,][\,yTbY\,][\,cIdx\,][\,x\,][\,y\,] =$$

$$sign(TransformCoeff[xTbY][yTbY][cIdx][x][y]) *$$

$$\left(\left(\left(abs(TransformCoeff[xTbY][yTbY][cIdx][x][y]) * f[QP\%6] * \right.\right.\right.$$

$$\left.\left.\frac{16}{DensityFactor[DensityIndex(xTBY,yTBY)]m[x][y]} + offset\right) \gg \frac{QP}{6}\right) \gg shift\right),$$

where QP is the quantization parameter assigned to the current picture or to the current block if QP parameter block-based adaptation is performed in the video coding scheme, and other parameters are the same as in step 623.

for dequantization process:

$$d[\,x\,][\,y\,] =$$

$$Clip3(\,coeffMin, coeffMax, (\,(DensityFactor[DensityIndex(xTBY,YTBY)] \times$$

$$TransCoeffLevel[\,xTbY\,][\,yTbY\,][\,cIdx\,][\,x\,][\,y\,] * m[\,x\,][\,y\,] * levelScale[QP\%6\,] \ll$$

$$(QP/6)) + (1 \ll (bdShift - 1)))) \gg bdShift),$$

where QP is the quantization parameter used for quantizing the current block, and other parameters are the same as in step 703.

For selecting the DensityFactor for the current block, similar embodiments as the ones described for selecting a deltaQP also apply here in a similar manner. So, they are not described further. According to these embodiments, a DensityIndex can be computed for a transform block, or for a coding unit, or a coding tree unit, or for each pixel of a block of pixels, etc.

Figure 10 illustrates the simplified structure of an apparatus (400) for coding an omnidirectional video according to an embodiment. Such an apparatus 400 is configured to implement the method for coding an omnidirectional video according to the present principle which has been described above in reference with figures 4 and 6A or 6B.

According to an embodiment, the encoder apparatus 400 comprises a processing unit PROC equipped for example with a processor and driven by a computer program PG stored in a memory MEM and implementing the method for coding an omnidirectional video according to the present principles.

At initialization, the code instructions of the computer program PG are for example loaded into a RAM (not shown) and then executed by the processor of the processing unit PROC. The processor of the processing unit PROC implements the steps of the method for coding an omnidirectional video which has been described here above, according to the instructions of the computer program PG.

The encoder apparatus 400 comprises a communication unit COMOUT to transmit an encoded bitstream STR to a data network. The encoder apparatus 400 also comprises an interface COMIN for receiving a picture to be coded or an omnidirectional video to encode.

Figure 11 illustrates the simplified structure of an apparatus (700) for decoding a bitstream representative of an omnidirectional video according to an embodiment. Such an apparatus 700 is configured to implement the method for decoding a bitstream representative of an omnidirectional video according to the present principle, which has been described here above in reference with figures 5 and 7-9.

According to an embodiment, the decoder apparatus 700 comprises a processing unit PROC equipped for example with a processor and driven by a computer program PG stored in a memory MEM and implementing the method for decoding a bitstream representative of an omnidirectional video according to the present principles.

At initialization, the code instructions of the computer program PG are for example loaded into a RAM (not shown) and then executed by the processor of the processing unit PROC. The processor of the processing unit PROC implements the steps of the method for decoding a bitstream representative of an omnidirectional video which has been described above, according to the instructions of the computer program PG.

The apparatus 700 may comprise a communication unit COMOUT to transmit the reconstructed pictures of the video data to a rendering device. The apparatus also comprises an interface COMIN for receiving a bitstream STR representative of the omnidirectional video to decode from a data network, or a gateway, or a Set-Top-Box. The apparatus 400 and 700 may be located at separate devices, or in the same device that acts as both a receiver and transmitter.

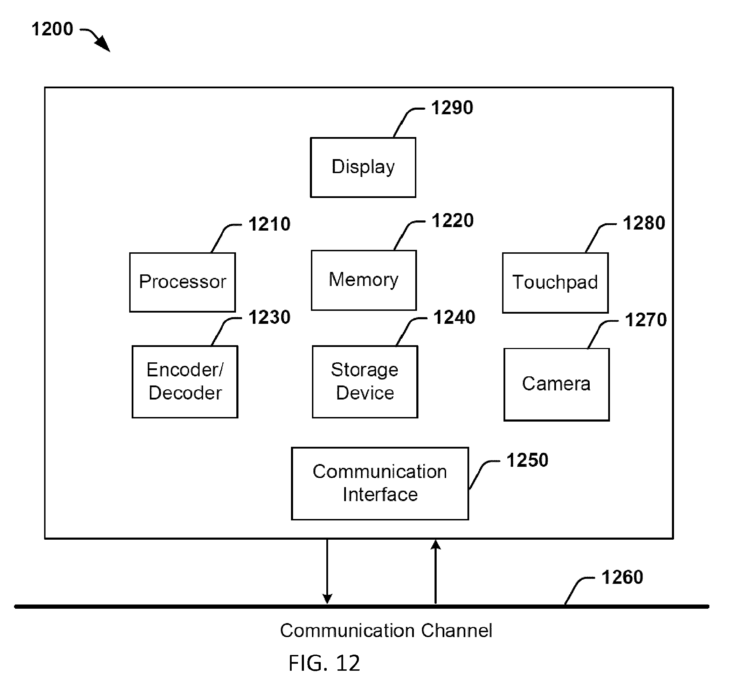

Figure 12 illustrates a block diagram of an exemplary system 1200 in which various aspects of the exemplary embodiments of the present principles may be implemented. System 1200 may be embodied as a device including the various components described below and is configured to perform the processes described above. Examples of such devices, include, but are not limited to, HMDs, personal computers, laptop computers, smartphones, tablet computers, digital multimedia set top boxes, digital television receivers, personal video recording systems, connected home appliances, and servers. System 1200 may comprise sensors, and may be communicatively coupled to other similar systems via a communication channel as shown in figure 12 and as known by those skilled in the art to implement the exemplary video system described above.

The system 1200 may include at least one processor 1210 configured to execute instructions loaded therein for implementing the various processes as discussed above. Processor 1210 may include embedded memory, input output interface and various other circuitries as known in the art. The system 1200 may also include at least one memory 1220 (e.g., a volatile memory device, a non-volatile memory device). System 1200 may additionally include a storage device 1240, which may include non-volatile memory, including, but not limited to, EEPROM, ROM, PROM, RAM, DRAM, SRAM, flash, magnetic disk drive, and/or optical disk drive. The storage device 1240 may comprise an internal storage device, an attached storage device and/or a network accessible storage device, as non-limiting examples. System 1200 may also include an encoder/decoder module 1230 configured to process data to provide an encoded video or decoded video.

Encoder/decoder module 1230 represents the module(s) that may be included in a device to perform the encoding and/or decoding functions. Encoder 400 and decoder 700 may be used in encoder/decoder module 1230. As is known, a device may include one or both of the encoding and decoding modules. Additionally, encoder/decoder module 1230 may be implemented as a separate element of system 1200 or may be incorporated within processors 1210 as a combination of hardware and software as known to those skilled in the art.

System 1200 may further include a display (1290) or may be communicatively coupled to the display via the communication channel. The display is, for example of OLED or LCD type. The display can also be an immersive (projective) wall, which is usually of a huge size.

System 1200 may further comprise a touch surface 1280 (e.g. a touchpad or a tactile screen) and a camera 1270. Processor 1210 may process signals received from sensors, which may or may not be part of system 1200. Some of the measurements from sensors can be used to compute the pose of system 1200 or of another device connected to system 1200. Camera 1270 may capture images of the environment for image processing. Processor 1210 may also perform the pre-processing and post-processing functions as described in figure. 1.

Program code to be loaded onto processors 1210 to perform the various processes described hereinabove may be stored in storage device 1240 and subsequently loaded onto memory 1220 for execution by processors 1210. In accordance with the exemplary embodiments of the present principles, one or more of the processor(s) 1210, memory 1220, storage device 1240 and encoder/decoder module 1230 may store one or more of the various items during the performance of the processes discussed herein above, including, but not limited to the input video, the bitstream, equations, formula, matrices, variables, operations, and operational logic.

The system 1200 may also include communication interface 1250 that enables communication with other devices via communication channel 1260. The communication interface 1250 may include, but is not limited to a transceiver configured to transmit and receive data from communication channel 1260. The communication interface may include, but is not limited to, a modem or network card and the communication channel may be implemented within a wired and/or wireless medium. The various components of system 1200 may be connected or communicatively coupled together using various suitable connections, including, but not limited to internal buses, wires, and printed circuit boards.

The exemplary embodiments according to the present principles may be carried out by computer software implemented by the processor 1210 or by hardware, or by a combination of hardware and software. As a non-limiting example, the exemplary embodiments according to the present principles may be implemented by one or more integrated circuits. The memory 1220 may be of any type appropriate to the technical environment and may be implemented using any appropriate data storage technology, such as optical memory devices, magnetic memory devices, semiconductor-based memory devices, fixed memory and removable memory, as non-limiting examples. The processor 1210 may be of any type appropriate to the technical environment, and may encompass one or more of microprocessors, general purpose computers, special purpose computers and processors based on a multi-core architecture, as non-limiting examples.

Various methods are described above, and each of the methods comprises one or more steps or actions for achieving the described method. Unless a specific order of steps or actions is required for proper operation of the method, the order and/or use of specific steps and/or actions may be modified or combined.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

**1.** A method for encoding a video, said method comprising, for at least one block of a picture of said video:

determining (612) for said block, a parameter for quantizing according to a spatial position of said block in said picture; and

encoding (613) said block using said determined parameter for quantizing.

2. A method for decoding a video, said method comprising, for at least one block of a picture of said video:

determining (702) for said block, a parameter for quantizing according to a spatial position of said block in said picture;

dequantizing (703) a block of quantized coefficients using said determined parameter for quantizing; and reconstructing (704) said block from at least said dequantized block.

3. An apparatus for encoding a video, said apparatus comprising, for at least one block of a picture of said video:

means for determining for said block, a parameter for quantizing according to a spatial position of said block in said picture; and

means for encoding said block using said determined parameter for quantizing.

4. An apparatus for decoding a video, said apparatus comprising, for at least one block of a picture of said video:

means for determining for said block, a parameter for quantizing according to a spatial position of said block in said picture;

means for dequantizing a block of quantized coefficients using said determined parameter for quantizing; and means for reconstructing said block from at least said dequantized block.

5. A method according to claim 1 or 2, or an apparatus according to claim 3 or 4, wherein said determining for said block, a parameter for quantizing according to a spatial position of said block in said picture comprises:

computing for said block said parameter for quantizing according to a projection function depending on said spatial position of said block, wherein a surface representing said video is projected onto said picture using said projection function.

6. A method according to claim 5, or an apparatus according to claim 5, wherein said determining for said block, a parameter for quantizing according to a spatial position of said block in said picture, comprises:

computing, for said picture, a set of parameters for quantizing according to said projection function; and selecting, for said block, said parameter for quantizing from said set of parameters for quantizing, depending on said spatial position of said block in said picture.

7. A method for decoding according to claim 6, or an apparatus according to claim 6, wherein determining for said block, a parameter for quantizing according to a spatial position of said block in said picture comprises:

decoding said set of parameters for quantizing; and selecting said parameter for quantizing for said block from among said set of parameters for quantizing according to said spatial position of said block in said picture.

8. A method according to any one of claims 1 or 2 or 5 to 7, or an apparatus according to any one of claims 3 to 7, wherein said parameter for quantizing is a quantization parameter associated with a quantization step size.

9. A method according to any one of claims 1 or 2 or 5 to 8, or an apparatus according to any one of claims 3 to 8, wherein said parameter for quantizing for said block is selected as being a parameter for quantizing computed for at least one pixel of said block.

10. A method according to claim 9 or an apparatus according to claim 9, wherein said selected parameter for quantizing is an average sum of parameters for quantizing computed for at least two pixels of said block.

11. A method according to any one of claims 5 to 10, or a device according to any one of claims 5 to 10 wherein said projection function is an equi-rectangular projection, and wherein said parameter for quantizing for said block is selected as being a parameter for quantizing computed for a pixel being on a same row of a center pixel of said block or as being a parameter for quantizing assigned to a row index of said block.

12. A method according to any one of claims 5 to 11, or a device according to any one of claims 5 to 11, wherein said block belongs to a group of blocks comprising at least one block of transform coefficients, said group of blocks forming a block having a size larger than or equal to said block to be encoded or decoded, and wherein said parameter for quantizing for said block is selected as being a parameter for quantizing assigned to said group of blocks.

13. A method according to claim 12, or an apparatus according to claim 12, wherein said projection function is an equi-rectangular projection and wherein said parameter for quantizing assigned to said group of blocks is a parameter for quantizing assigned to a row index of said group of blocks.

14. A bitstream representative of a coded video comprising:

coded data representative of at least one block of a picture of said video; and
coded data representative of a set of parameters for quantizing for said picture, and wherein a parameter for quantizing selected from said set of parameters for quantizing is used for encoding said at least one block to form said coding data representative of said block, said parameter for quantizing being selected according to a spatial position of said block in said picture.

15. A computer program comprising software code instructions for performing the methods according to any one of claims 1, 2 or 5 to 13 when the computer program is executed by one or several processors.

16. An immersive rendering device comprising an apparatus for decoding a bitstream representative of a large field of view video according to any one of claims 4 to 13.

17. A system for immersive rendering of a large field of view video encoded into a bitstream, comprising at least:

- a network interface (600) for receiving said bitstream from a data network,
- an apparatus (700) for decoding said bitstream according to any one of claims 4 to 13,
- an immersive rendering device (900).

EP 3 301 921 A1

FIG. 1

FIG. 13

FIG. 14

FIG. 15

EP 3 301 921 A1

FIG. 16

FIG. 17

EP 3 301 921 A1

FIG. 18

FIG. 19

EP 3 301 921 A1

6000

5000

Internet

GW

Internet

Internet

7000

game
console

game
console

7000

User inputs

sensors

2000

3000

FIG. 20

10

101

102

display

104

touchpad

Communication
I/f

processing

105

106

memory

camera

103

FIG. 21

EP 3 301 921 A1

70

Communication I/f — 702

Smartphone housing — 705

optics — 704

FIG. 22

80

801 — display

804 — processing

802 — touchpad

Communication I/f — 806

805 — memory

803 — camera

FIG. 23

FIG. 2A

FIG. 2B

FIG. 2C

FIG. 3B

FIG. 3A

FIG. 3C

FIG. 3D

FIG. 3E

FIG. 4

FIG. 5

EP 3 301 921 A1

DETERMINING
DELTAQP$_T$ — 611

↓

COMPUTING QP$_T$ — 612

↓

QUANTIZING
BLOCK — 613

FIG. 6A

COMPUTING SET
OF DELTAQP(x,y) — 620

↓

SELECTING
DELTAQP$_T$ — 621

↓

COMPUTING QP$_T$ — 622

↓

QUANTIZING — 623

↓

CODING
DELTAQP(x,y) — 624

FIG. 6B

DETERMINING
DELTAQP$_T$ — 701

↓

COMPUTING QP$_T$ — 702

↓

DEQUANTIZING — 703

↓

RECONSTRUCTING
BLOCK — 704

FIG. 7

EP 3 301 921 A1

EP 3 301 921 A1

```
                          ┌──────────────────┐  ⌒ 800
                          │  DECODING SET OF │
                          │   DELTAQP(x,y)   │
                          └────────┬─────────┘
                                   │
                                   ▼
                          ┌──────────────────┐  ⌒ 801
                          │    SELECTING     │
                          │    DELTAQP_T     │
                          └──────────────────┘
```

FIG. 8

```
                          ┌──────────────────┐  ⌒ 900
                          │  COMPUTING SET   │
                          │  OF DELTAQP(x,y) │
                          └────────┬─────────┘
                                   │
                                   ▼
                          ┌──────────────────┐  ⌒ 901
                          │    SELECTING     │
                          │    DELTAQP_T     │
                          └──────────────────┘
```

FIG. 9

```
   ┌────────────────────────────────┐  ⌒ 400
   │  ┌─────────┐    ┌─────────┐     │
   │  │   MEM   │    │  COMIN  │     │
   │  └─────────┘    └─────────┘     │
   │  ┌─────────┐    ┌─────────┐     │
   │  │   PG    │    │ COMOUT  │     │
   │  └─────────┘    └─────────┘     │
   │  ┌─────────┐                    │
   │  │  PROC   │                    │
   │  └─────────┘                    │
   └────────────────────────────────┘
```

FIG. 10

```
   ┌────────────────────────────────┐  ⌒ 700
   │  ┌─────────┐    ┌─────────┐     │
   │  │   MEM   │    │  COMIN  │     │
   │  └─────────┘    └─────────┘     │
   │  ┌─────────┐    ┌─────────┐     │
   │  │   PG    │    │ COMOUT  │     │
   │  └─────────┘    └─────────┘     │
   │  ┌─────────┐                    │
   │  │  PROC   │                    │
   │  └─────────┘                    │
   └────────────────────────────────┘
```

FIG. 11

FIG. 12

EP 3 301 921 A1

Europäisches
Patentamt

European
Patent Office

Office européen
des brevets

# EUROPEAN SEARCH REPORT

Application Number

EP 16 30 6270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/207234 A1 (CHEN WEN-HSIUNG [US] ET AL) 20 August 2009 (2009-08-20) | 1-10,14 | INV. H04N19/124 H04N19/167 H04N19/176 |
| Y | * figure 7 * <br> * paragraph [0056] * <br> * paragraph [0065] * <br> * paragraph [0069] - paragraph [0072] * | 11-13, 15-17 | |
| Y | US 2016/112489 A1 (ADAMS RILEY [US] ET AL) 21 April 2016 (2016-04-21) <br> * paragraph [0094] - paragraph [0095] * | 11-13, 15-17 | |
| A | US 2016/112704 A1 (GRANGE ADRIAN WILLIAM [US] ET AL) 21 April 2016 (2016-04-21) <br> * paragraph [0043] - paragraph [0054] * | 1-17 | |

TECHNICAL FIELDS
SEARCHED (IPC)

H04N

The present search report has been drawn up for all claims

| Place of search | Date of completion of the search | Examiner |
|---|---|---|
| Munich | 7 December 2016 | Regidor Arenales, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 30 6270

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2016

| Patent document cited in search report | | Publication date | Patent family member(s) | | Publication date |
|---|---|---|---|---|---|
| US 2009207234 | A1 | 20-08-2009 | CN 101953158 A<br>EP 2255531 A2<br>US 2009207234 A1<br>WO 2009102503 A2 | | 19-01-2011<br>01-12-2010<br>20-08-2009<br>20-08-2009 |
| US 2016112489 | A1 | 21-04-2016 | NONE | | |
| US 2016112704 | A1 | 21-04-2016 | NONE | | |

EPO FORM P0459

# EP 3 301 921 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. RATH ; C. GUILLEMOT.** Frame-theoretic analysis of DFT codes with erasures. *IEEE Transactions on Signal Processing,* February 2004, vol. 52 (2